# EUROPEAN PATENT APPLICATION

(11) **EP 3 381 786 A1**
(43) Date of publication of application: **03.10.2018**
(21) Application number: 18165421.1
(22) Date of filing: 03.04.2018
(51) Int. Cl.: B62M 6/55, B62M 6/50, B62K 19/30

(54) **CLUTCH TYPE ELECTRIC DRIVE DEVICE FOR BICYCLE**

(30) Priority: 30.03.2017 TW 106110927
(71) Applicant: Huang, Yung-Sung, Taipei City 104 (TW)
(72) Inventor: Huang, Yung-Sung, Taipei City 104 (TW)
(74) Representative: Michalski Hüttermann & Partner Patentanwälte mbB

(57) **Abstract**

A clutch type electric drive device for a bicycle has a support shaft tube (1100), a motor (100), a decelerating device (200), a unidirectional clutch bearing (300), an input gear shaft (400), a pedal shaft (700), an axle bracket (600), an axle casing (800) and a ratchet (900). The motor (100) is fixed in the support shaft tube (1100) with a driving shaft (101). The decelerating device (200) is disposed on the driving shaft (101) of the motor (100) and outputs power through an output shaft (201). A fixing hole is configured on the top of the input gear shaft (400). An inner and outer ring of the unidirectional clutch bearing (300) is configured on the output shaft (201) and fixed in the fixing hole respectively. The axle bracket (600) is configured at the bottom of the support shaft tube (1100). The pedal shaft (700) is fitted in the axle bracket (600). The axle casing (800) is an elongated tubular member. The ratchet (900) is connected to the pedal shaft (700).

## Description

### BACKGROUND

### 1. Technical Field

The present disclosure is related to a clutch type electric drive device for a bicycle, and more particularly to a clutch type electric drive device for a bicycle integrated with a unidirectional clutch bearing and a decelerating device.

### 2. Description of the Related Art

Nowadays, although electric drive devices for bicycles are becoming more developed, the existing electric drive devices are too bulky to suit road bikes.

Generally speaking, tires and handlebars of road bikes are specifically designed to reduce windage, and additionally, the distance between the two pedals is narrower for easier pedaling. However, the use of an existing electric drive device generally implies a wider distance between the two pedals, thus reducing the ease and efficiency of pedaling.

Consequently, current state of the art does not provide an electric drive device suitable for efficient pedaling, which is able to continuously output sufficient power and adequately applied to a variety of bikes.

### SUMMARY

In accordance with the issues of the known techniques above, the purpose of the present disclosure is to provide a clutch type electric drive device for a bicycle, including a support shaft tube, a motor, a decelerating device, a unidirectional clutch bearing, an input gear shaft, an axle bracket, a pedal shaft, a fixing cover, a sensing device, an axle casing and a ratchet. The support shaft tube is a hollow tube. The motor is correspondingly fixed in the support shaft tube and has a driving shaft. The decelerating device is configured on the driving shaft of the motor and outputs power through an output shaft. The unidirectional clutch bearing has an inner ring and an outer ring, wherein the outer ring of the unidirectional clutch bearing wedges the inner ring of the unidirectional clutch bearing in one rotating direction, the outer ring of the unidirectional clutch bearing pivotally rotates with respect to the inner ring of the unidirectional clutch bearing in the other rotating direction, and the inner ring of the unidirectional clutch bearing is configured on the output shaft. The input gear shaft has a fixing hole on a top of the input gear shaft, the outer ring of the unidirectional clutch bearing is correspondingly fixed in the fixing hole, and the input gear shaft has a first steering gear thereon. The axle bracket is correspondingly configured at a bottom of the support shaft tube, connected with the support shaft tube, and configured with a first axle hole and a second axle hole on two transverse ends of the axle bracket. The pedal shaft is rotatably configured in the axle bracket, and threads through the first axle hole and the second axle hole. The fixing cover is configured on one end of the pedal shaft and rotates with the pedal shaft synchronously, wherein the fixing cover has a fixing trough which is configured on an inner surface of the fixing cover, and also has a fixing cover perforation which is configured at a bottom of the fixing trough, and the pedal shaft pierces through the fixing cover perforation. The sensing device is configured on the other end of the pedal shaft, senses rotations of the pedal shaft, and transmits an electric signal to control rotations of the motor. The axle casing is an elongated tubular member, rotatably configured on the pedal shaft and in the second axle hole, wherein an inner end of the axle casing pierces into the axle bracket, a second steering gear is configured on the inner end, the second steering gear directly engages the first steering gear, and the axle casing is connected with the inner surface of the fixing cover. The ratchet is configured on the axle casing and in the fixing trough, wherein the axial direction of the unidirectional clutch bearing is perpendicular to that of the ratchet.

Preferably, the decelerating device includes a planetary reducer.

Preferably, the pedal shaft is configured with a first pedal assembly on a first end piercing through the first axle hole, and links up with the first pedal assembly to synchronously rotate with each other; furthermore, the pedal shaft is configured with a second pedal assembly on a second end piercing through the second axle hole, and links up with the second pedal assembly to synchronously rotate with each other.

Preferably, the motor makes the ratchet idle and does not drive the first pedal assembly and the second pedal assembly.

Preferably, pedaling the first pedal assembly and the second pedal assembly makes the pedal shaft and the input gear shaft rotate, such that the input gear shaft makes the outer ring of the unidirectional clutch bearing pivotally rotate with respect to the inner ring of the unidirectional clutch bearing but does not make the motor rotate.

According to the purpose described above, the present disclosure further provides another clutch type electric drive device for a bicycle, including a support shaft tube, a motor, a decelerating device, a unidirectional clutch bearing, an input gear shaft, an axle bracket, a pedal shaft, a fixing assembly, a first magnetic ring, a second magnetic ring, a Hall magnetic induction device, an axle casing and a ratchet. The support shaft tube is a hollow tube. The motor is correspondingly fixed in the support shaft tube and has a driving shaft. The decelerating device is configured on the driving shaft of the motor and outputs power through an output shaft. The unidirectional clutch bearing has an inner ring and an outer ring, wherein the inner ring of the unidirectional clutch bearing wedges the outer ring of the unidirectional clutch bearing in one rotating direction, the inner ring of the unidirectional clutch bearing pivotally rotates with respect to the outer ring of the unidirectional clutch bearing in the other rotating direction, and the inner ring of the unidirectional clutch bearing is configured on the output shaft. The input gear shaft has a fixing hole on a top of the input gear shaft, wherein the outer ring of the unidirectional clutch bearing is fixed in the fixing hole, and the input gear shaft has a first steering gear thereon. The axle bracket is correspondingly configured at a bottom of the support shaft tube, connected with the support shaft tube, and configured with a first axle hole and a second axle hole on two transverse ends of the axle bracket. The pedal shaft is rotatably configured in the axle bracket and threads through the first axle hole and the second axle hole, wherein the pedal shaft is configured with a first pedal assembly on a first end piercing through the first axle hole and links up with the first pedal assembly to synchronously rotate with each other, and the pedal shaft is configured with a second pedal assembly on a second end piercing through the second axle hole and links up with the second pedal assembly to synchronously rotate with each other. The fixing assembly includes a fixing cover, an elastic component and a fixing base. The fixing cover is configured on one end of the pedal shaft, rotates with the pedal shaft synchronously, and has a fixing cover perforation, a fixing trough and a plurality of first hooks, wherein the pedal shaft pierces through the fixing cover perforation, and the plurality of first hooks are configured at a peripheral side of an inner surface of the fixing cover. The fixing base has a fixing base perforation and a plurality of second hooks, wherein the plurality of second hooks are configured at a peripheral side of a surface of the fixing base in correspondence with the first hooks, the elastic component is configured between the first hooks and the second hooks for supporting mutual rotations and engagements by the first hooks and the second hooks and for connecting the fixing cover with the fixing base. The axle casing is an elongated tubular member, rotatably configured on the pedal shaft and in the second axle hole, wherein an inner end of the axle casing pierces into the axle bracket, a second steering gear is configured on the inner end, the second steering gear directly engages the first steering gear, and the axle casing is configured around the fixing base with respect to the fixing base perforation. The first magnetic ring is configured on an inner surface of the fixing base, wherein the first magnetic ring synchronously rotates with the fixing base. The Hall magnetic induction device is fixed in the axle bracket and is adjacent to the first magnetic ring. The second magnetic ring is configured on the inner surface of the fixing base, pierces through the fixing base, and is locked on the inner surface of the fixing cover, wherein the second magnetic ring is coaxial with respect to the first magnetic ring. The ratchet is configured on the axle casing and also on the inner surface of the fixing cover. Additionally, when a strength which is larger than a predetermined strength is exerted on the fixing cover, the fixing cover pushes the elastic component to subsequently drive the second magnetic ring locked on the fixing cover to conduct a differential motion with respect to the first magnetic ring, such that the Hall magnetic induction device senses a varying magnetic field resulting from the differential motion of the first magnetic ring and the second magnetic ring, and then transmits an electric signal to control rotations of the motor.

Preferably, the first magnetic ring and the second magnetic ring include a plurality of magnetic poles which are alternately arranged.

Preferably, the elastic component includes springs.

Preferably, the motor makes the ratchet idle and does not drive the first pedal assembly and the second pedal assembly.

Preferably, pedaling the first pedal assembly and the second pedal assembly makes the pedal shaft and the input gear shaft rotate, such that the input gear shaft makes the outer ring of the unidirectional clutch bearing pivotally rotate with respect to the inner ring of the unidirectional clutch bearing but does not make the motor rotate.

### BRIEF DESCRIPTION OF THE DRAWINGS

FIG. 1 is a schematic diagram of a first aspect of configuration of a clutch type electric drive device for a bicycle of the present disclosure.
FIG. 2 is a schematic diagram of a second aspect of configuration of a clutch type electric drive device for a bicycle of the present disclosure.
FIG. 3 is a schematic diagram of a first embodiment of a clutch type electric drive device for a bicycle of the present disclosure.
FIG. 4 is a schematic diagram of a second embodiment of a clutch type electric drive device for a bicycle of the present disclosure.

### DESCRIPTION OF THE EXEMPLARY EMBODIMENTS

For a better understanding of the technical features, details and advantages of the present disclosure as well as the achievable effects thereof, the present disclosure is explicitly described below in the form of embodiments with reference to the appended drawings. The drawings present schematics of the present disclosure and assist with the specification, whereby what is depicted in the drawings does not necessarily conform to the real dimensions and precise layout of the present disclosure. That is, the actual scope of the practical implementation of the present disclosure is not constrained by the dimensions and layout depicted in the appended drawings.

The embodiments of the clutch type electric drive device for a bicycle will be more explicitly described below by referring to the appended drawings. In order to make the description below easier to understand, the same components will be labeled with the same symbols in the following embodiments.

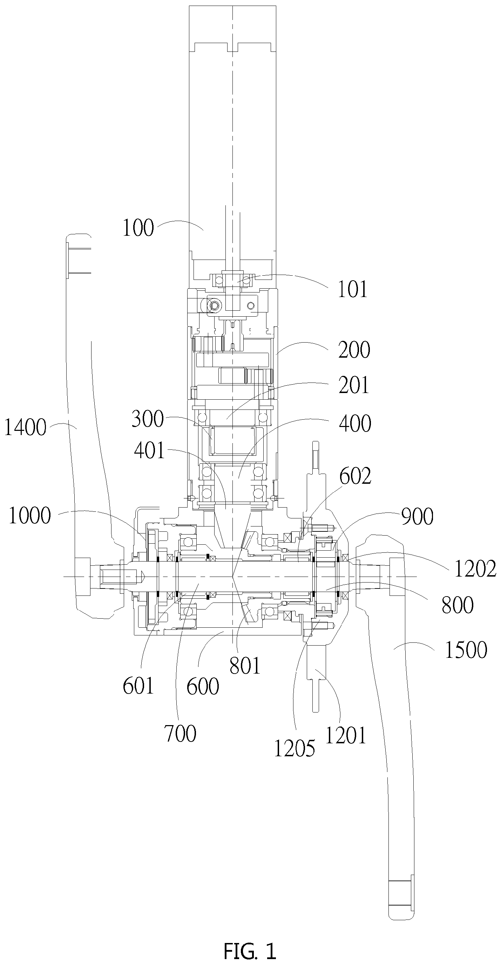

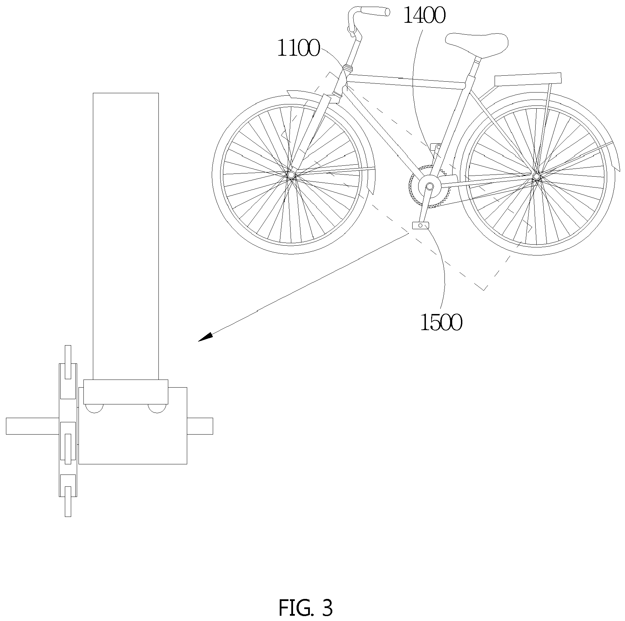

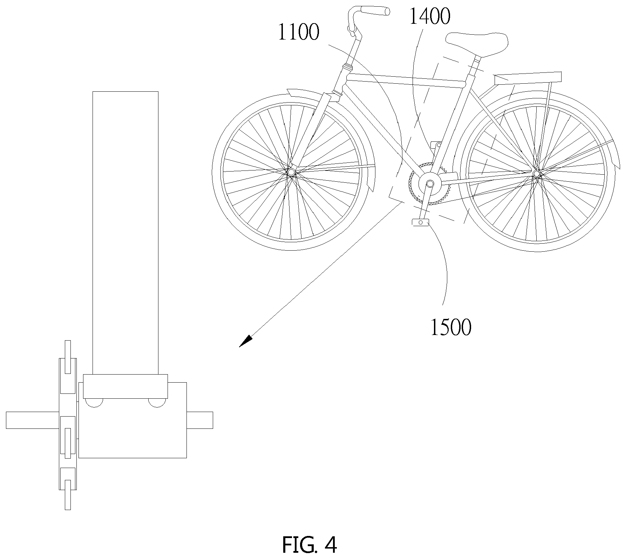

Please refer to FIG. 1 together with FIG. 3 and FIG. 4, wherein FIG. 1 is a schematic diagram of a first aspect of configuration of a clutch type electric drive device for a bicycle of the present disclosure, FIG. 3 is a schematic diagram of the first embodiment of a clutch type electric drive device for a bicycle of the present disclosure, and FIG. 4 is a schematic diagram of a second embodiment of the clutch type electric drive device for a bicycle of the present disclosure. The clutch type electric drive device for the bicycle of the present disclosure includes a support shaft tube 1100, a motor 100, a decelerating device 200, a unidirectional clutch bearing 300, an input gear shaft 400, an axle bracket 600, a pedal shaft 700, a fixing cover 1201, a sensing device 1000, an axle casing 800 and a ratchet 900.

As illustrated in FIG. 1, the motor 100 has a driving shaft 101, and the driving shaft 101 can be connected with the decelerating device 200.

The decelerating device 200 of the present disclosure can include a decelerating gear set. The decelerating device 200 can be configured on the driving shaft 101 of the motor 100, driven by the driving shaft 101, and can output power through an output shaft 201. Hence, due to the design of the decelerating device 200, the rotational speed of the motor 100 can be reduced so as to increase the torque thereof, such that sufficient power is available to drive the bike to move in a variety of conditions.

The unidirectional clutch bearing 300 has an inner ring and an outer ring, wherein the inner ring of the unidirectional clutch bearing 300 wedges the outer ring of the unidirectional clutch bearing 300 in one rotating direction, the inner ring of the unidirectional clutch bearing 300 pivotally rotates with respect to the outer ring of the unidirectional clutch bearing 300 in the other rotating direction(i.e. the reverse rotating direction), and the inner ring of the unidirectional clutch bearing 300 is configured on the output shaft 201.

The input gear shaft 400 has a fixing hole on the top thereof, wherein the outer ring of the unidirectional clutch bearing 300 is correspondingly fixed in the fixing hole, and the input gear shaft 400 has a first steering gear 401 thereon.

The axle bracket 600 is correspondingly configured at the bottom of the support shaft tube 1100, connected with the support shaft tube 1100, and configured with a first axle hole 601 and a second axle hole 602 on two transverse ends of the axle bracket 600.

The fixing cover 1201 has a fixing trough 1205, as illustrated in the drawings, which is configured on an inner surface of the fixing cover 1201, and also has a fixing cover perforation 1202 which is configured at the bottom of the fixing trough 1205, and the pedal shaft 700 pierces through the fixing cover perforation 1202.

The pedal shaft 700 is configured with a first pedal assembly 1400 on a first end piercing through the first axle hole 601 and links up with the first pedal assembly 1400 to synchronously rotate with each other, and the pedal shaft 700 is configured with a second pedal assembly 1500 on a second end piercing through the second axle hole 602 and links up with the second pedal assembly 1500 to synchronously rotate with each other. Hence, the first pedal assembly 1400 links up with the second pedal assembly 1500 to synchronously rotate together, so as to allow a user to advance via pedaling.

The axle casing 800 is an elongated tubular member, which is rotatably configured on the pedal shaft 700 and in the second axle hole 602, wherein an inner end of the axle casing 800 pierces into the axle bracket 600, and a second steering gear 801 is configured on the inner end. Furthermore, the second steering gear 801 directly engages the first steering gear 401, and the axle casing 800 is connected with the inner surface of the fixing cover 1201 and the ratchet 900. The ratchet 900 can be configured on the axle casing 800 and in the fixing trough 1205.

Consequently, due to the configuration described above, when the motor 100 is in operation, the ratchet 900 is driven to idle, such that the first pedal assembly 1400 and the second pedal assembly 1500 are not driven by the motor 100. In other words, when the motor 100 is running, even though the user does not pedal, the bike can still advance. Furthermore, for the user's safety, the user can stop the motor 100 by applying brakes, such that risks due to driving at high speed can be accordingly avoided.

Moreover, when no power is supplied, the user can switch to pedal the first and second pedal assemblies 1400 and 1500. Consequently, when pedaling the first pedal assembly 1400 and the second pedal assembly 1500, the pedal shaft 700 and the input gear shaft 400 are driven to rotate, such that the input gear shaft 400 can drive the outer ring of the unidirectional clutch bearing 300 to pivotally rotate with respect to the inner ring of the unidirectional clutch bearing 300, but the input gear shaft 400 does not make the motor 100 rotate in this situation. Hence, when pedaling the first pedal assembly 1400 and the second pedal assembly 1500, no additional energy is expended due to a resistance of the motor 100.

Additionally, the sensing device 1000 can be configured on the other end of the pedal shaft 700 for sensing rotations of the pedal shaft 700. For example, after pedaling the first pedal assembly 1400 and the second pedal assembly 1500 by a few cycles or for a few seconds, the sensing device 1000 can transmit an electric signal to control rotations of the motor 100.

Therefore, due to the configuration described above, if the user needs the assistance of the motor 100 to make the bike advance, the user can pedal the first pedal assembly 1400 and the second pedal assembly 1500 by a few cycles or for a few seconds, such that the motor 100 can be activated through the sensing device 1000. Besides, since the motor 100 does not drive the first pedal assembly 1400 and the second pedal assembly 1500 when in operation, pedaling the first pedal assembly 1400 and the second pedal assembly 1500 does not interfere with rotations of the motor 100 except for the condition described above where the motor 100 can be activated through the sensing device 1000.

Therefore, due to the configuration described above, no matter which mode is used, that is pedaling or utilizing the motor 100 as a power source to drive the bike, the two modes will not interfere with each other. Furthermore, the user can stop the motor 100 by applying the brakes, such that the clutch type electric drive device for a bicycle of the present disclosure can ensure the user's safety, and even when no power is supplied, the user can switch over to pedal the bike as with a conventional bike. On the other hand, if the user chooses to drive the bike mainly by pedaling and occasionally using the motor 100 as an auxiliary power source, risks due to too fast a rotational speed of the motor 100 can be avoided, and thereby it simultaneously ensures the user's safety and convenience.

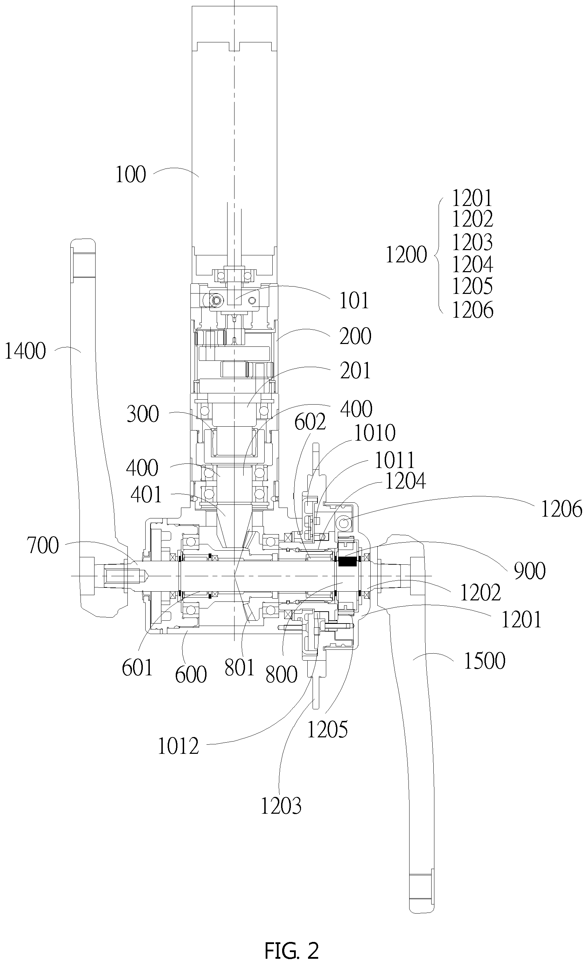

Please refer to FIG. 2 together with FIG. 3 and FIG. 4, wherein FIG. 2 is a schematic diagram of a second aspect of configuration of a clutch type electric drive device for a bicycle of the present disclosure, FIG. 3 is a schematic diagram of the first embodiment of the clutch type electric drive device for a bicycle of the present disclosure, and FIG. 4 is a schematic diagram of the second embodiment of the clutch type electric drive device for a bicycle of the present disclosure.

As illustrated in FIG. 2, the second aspect of configuration in the clutch type electric drive device for the bicycle includes a support shaft tube 1100, a motor 100, a decelerating device 200, a unidirectional clutch bearing 300, an input gear shaft 400, an axle bracket 600, a pedal shaft 700, a fixing assembly 1200, a first magnetic ring 1011, a second magnetic ring 1012, a Hall magnetic induction device 1010, an axle casing 800 and a ratchet 900.

Hence, the second aspect of configuration of the clutch type electric drive device for a bicycle has components as in the first aspect of configuration of the clutch type electric drive device for a bicycle and other additional components. The support shaft tube 1100 of the present disclosure is a hollow tube capable of fixing the motor 100 therein, such that the decelerating device 200 can be configured on the driving shaft 101 of the motor 100 and output power through an output shaft 201. Furthermore, the motor 100 can be a tubular motor having a contour of a long-tube shape.

The connecting relationship between the unidirectional clutch bearing 300 and the input gear shaft 400 is the same as in the description above. Through the configuration of the unidirectional clutch bearing 300 and the input gear shaft 400, the power output of the motor 100 can be stable so as to meet the requirement of driving the bike. Besides, as in the description above, a variety of configurations of different gear ratios of the decelerating device 200 including the planetary reducer can be utilized to subsequently acquire the needed power output.

The axle bracket 600 can be correspondingly configured at the bottom of the support shaft tube 1100, connected with the support shaft tube 1100, and configured with a first axle hole 601 and a second axle hole 602 on two transverse ends of the axle bracket 600.

The pedal shaft 700 can be rotatably configured in the axle bracket 600 and thread through the first axle hole 601 and the second axle hole 602.

Furthermore, at least one bearing unit can be configured between the pedal shaft 700 and the first axle hole 601, and at least one bearing unit can be configured between the axle casing 800 and the second axle hole 602, such that the pedal shaft 700 can smoothly operate between the first axle hole 601 and the second axle hole 602.

The pedal shaft 700 is configured with the first pedal assembly 1400 on the first end piercing through the first axle hole 601 and links up with the first pedal assembly 1400 to synchronously rotate with each other, and the pedal shaft 700 is configured with the second pedal assembly 1500 on a second end piercing through the second axle hole 602 and links up with the second pedal assembly 1500 to synchronously rotate with each other. Hence, the first pedal assembly 1400 links up with the second pedal assembly 1500 to synchronously rotate together, so as to allow the user to advance via pedaling.

The fixing assembly 1200 includes the fixing cover 1201, an elastic component 1206 and a fixing base 1203. The fixing cover 1201 is configured on one end of the pedal shaft 700, rotates with the pedal shaft 700 synchronously, and has the fixing cover perforation 1202, the fixing trough 1205 and a plurality of first hooks, wherein the pedal shaft 700 pierces through the fixing cover perforation 1202, and the plurality of first hooks are configured at a peripheral side of the inner surface of the fixing cover 1201. The fixing base 1203 has a fixing base perforation 1204 and a plurality of second hooks, wherein the plurality of second hooks are configured at a peripheral side of a surface of the fixing base 1203 in correspondence with the first hooks, the elastic component 1206 can be configured between the first hooks and the second hooks for supporting mutual rotations and engagements by the first hooks and the second hooks and for connecting the fixing cover 1201 with the fixing base 1203.

The axle casing 800 can be an elongated tubular member, rotatably configured on the pedal shaft 700 and in the second axle hole 602, wherein the inner end of the axle casing 800 pierces into the axle bracket 600, the second steering gear 801 is configured on the inner end, the second steering gear 801 directly engages the first steering gear 401, and the axle casing 800 is configured around the fixing base 1203 with respect to the fixing base perforation 1204.

The first magnetic ring 1011 is configured on an inner surface of the fixing base 1203, wherein the first magnetic ring 1011 synchronously rotates with the fixing base 1203.

The Hall magnetic induction device 1010 is fixed in the axle bracket 600 and is adjacent to the first magnetic ring 1011.

The second magnetic ring 1012 is configured on the inner surface of the fixing base 1203, pierces through the fixing base 1203, and is locked on the inner surface of the fixing cover 1201, wherein the second magnetic ring 1012 is coaxial with respect to the first magnetic ring 1011.

The ratchet 900 is configured on the axle casing 800 and also on the inner surface of the fixing cover 1201. Besides, the first magnetic ring 1011 and the second magnetic ring 1012 of the present disclosure include a plurality of magnetic poles which are alternately arranged, such that differential motions of the first magnetic ring 1011 and the second magnetic ring 1012 can lead to a varying magnetic field.

Additionally, when a strength which is larger than a predetermined strength is exerted on the fixing cover 1201, the fixing cover 1201 can push the elastic component 1206 to subsequently drive the second magnetic ring 1012 locked on the fixing cover 1201 to conduct a differential motion with respect to the first magnetic ring 1011, such that the Hall magnetic induction device 1010 can sense the varying magnetic field resulting from the differential motion of the first magnetic ring 1011 and the second magnetic ring 1012, and then transmit an electric signal to control rotations of the motor 100.

Therefore, due to the configuration described above, when the user pedals the first pedal assembly 1400 and the second pedal assembly 1500, the Hall magnetic induction device 1010 can sense the varying magnetic field between the first magnetic ring 1011 and the second magnetic ring 1012 so as to assist with driving the bike. For example, if the user strongly pedals the first pedal assembly 1400 and the second pedal assembly 1500 when starting or climbing, the fixing cover 1201 would be driven to push the elastic component 1206, such that the Hall magnetic induction device 1010 can sense the varying magnetic field resulting from the differential motion of the first magnetic ring 1011 and the second magnetic ring 1012, and then transmit an electric signal to control rotations of the motor 100. Consequently, rotations of the motor 100 can be activated or intermittently operated according to actual requirements through the varying magnetic field, and even continuously operated by controlling the varying magnetic field, so as to assist the user by reducing the exerted force necessary to pedal the bike forward.

Furthermore, due to the configuration described above, when the motor 100 is in operation, the ratchet 900 is driven to idle, such that the first pedal assembly 1400 and the second pedal assembly 1500 are not driven by the motor 100. In other words, when the motor 100 is in operation, even though the user does not pedal, the bike can still advance.

Moreover, when no power is supplied, the user can switch to pedal. Consequently, when pedaling the first pedal assembly 1400 and the second pedal assembly 1500, the pedal shaft 700 and the input gear shaft 400 are driven to rotate, such that the input gear shaft 400 can drive the outer ring of the unidirectional clutch bearing 300 to pivotally rotate with respect to the inner ring of the unidirectional clutch bearing 300, but the input gear shaft 400 does not make the motor 100 rotate in this situation. Hence, when pedaling the first pedal assembly 1400 and the second pedal assembly 1500, no additional energy is expended due to the resistance of the motor 100.

In one embodiment of the present disclosure, the support shaft tube 1100 can be configured at the relative position marked in FIG. 3, wherein the support shaft tube 1100 is configured at the position of the down tube.

In another embodiment of the present disclosure, the support shaft tube 1100 can be configured at the relative position marked in FIG. 4, wherein the support shaft tube 1100 is configured at the position of the seat tube.

No matter where the support shaft tube 1100 is configured at, i.e. whether at the down tube or the seat tube, and since the unidirectional clutch bearing 300 and the decelerating device 200 are mutually connected and integrated in the support shaft tube 1100, the distance between the first pedal assembly 1400 and the second pedal assembly 1500 can be effectively reduced without affecting the pedaling and driving functions of the clutch type electric drive device for the bicycle. Hence, in contrast with existing bikes with an auxiliary drive device, the distance between the two pedals is reduced for easier and more efficient pedaling.

Furthermore, the user's safety is increased, as the user can stop the motor 100 by applying the brakes, such that risks due to driving at high speed can be accordingly avoided.

In summary, due to the specific design of the clutch type electric drive device for the bicycle of the present disclosure, with the unidirectional clutch bearing 300 and the ratchet 900 configured on the pedal shaft 700, when the user chooses to drive the bike with electric power, the first pedal assembly 1400 and the second pedal assembly 1500 are not engaged to drive the bike, thereby avoiding the risk that the first pedal assembly 1400 and the second pedal assembly 1500 engage into a high-speed rotation which would result in possible injury to the users. On the other hand, when the user chooses to pedal the bike, the electric drive assembly such as the output shaft 201 is not reversely driven, and so the exerted force when pedaling can be reduced, and moreover, the unnecessary frictional loss within internal components can be avoided. Therefore, compared with current auxiliary drive devices, the clutch type electric drive device for the bicycle of the present disclosure has a significant improvement in both applicability and safety.

The descriptions above are merely for the purpose of exemplifying rather than limiting the present disclosure. Therefore, numerous modifications, variations and enhancements can be made thereto by those skilled in the art without departing from the scope of the present disclosure as set forth in the claims.

## Claims

1. A clutch type electric drive device for a bicycle, comprising:
a support shaft tube (1100), being a hollow tube;
a motor (100), correspondingly fixed in the support shaft tube (1100), and having a driving shaft (101);
a decelerating device (200), configured on the driving shaft (101) of the motor (100), and outputting power through an output shaft (201);
a unidirectional clutch bearing (300), having an inner ring and an outer ring, the outer ring of the unidirectional clutch bearing (300) wedging the inner ring of the unidirectional clutch bearing (300) in one rotating direction, the outer ring of the unidirectional clutch bearing (300) pivotally rotating with respect to the inner ring of the unidirectional clutch bearing (300) in the other rotating direction, and the inner ring of the unidirectional clutch bearing (300) being configured on the output shaft (201);
an input gear shaft (400), having a fixing hole on a top of the input gear shaft (400), the outer ring of the unidirectional clutch bearing (300) being fixed in the fixing hole, and the input gear shaft (400) having a first steering gear (401) thereon;
an axle bracket (600), correspondingly configured at a bottom of the support shaft tube (1100), connected with the support shaft tube (1100), and configured with a first axle hole (601) and a second axle hole (602) on two transverse ends of the axle bracket (600);
a pedal shaft (700), rotatably configured in the axle bracket (600), and threading through the first axle hole (601) and the second axle hole (602);
a fixing cover (1201), configured on one end of the pedal shaft (700), rotating with the pedal shaft (700) synchronously, the fixing cover (1201) having a fixing trough (1205) which is configured on an inner surface of the fixing cover (1201) and also having a fixing cover perforation (1202) which is configured at a bottom of the fixing trough (1205), and the pedal shaft (700) piercing through the fixing cover perforation (1202);
a sensing device (1000), configured on the other end of the pedal shaft (700), sensing rotations of the pedal shaft (700), and transmitting an electric signal to control rotations of the motor (100);
an axle casing (800), being an elongated tubular member, rotatably configured on the pedal shaft (700) and in the second axle hole (602), an inner end of the axle casing (800) piercing into the axle bracket (600), a second steering gear (801) being configured on the inner end, the second steering gear (801) directly engaging the first steering gear (401), and the axle casing (800) being connected with the inner surface of the fixing cover (1201); and
a ratchet (900), configured on the axle casing (800) and in the fixing trough (1205);
wherein an axial direction of the unidirectional clutch bearing (300) is perpendicular to that of the ratchet (900).

2. The clutch type electric drive device for the bicycle of claim 1, wherein the decelerating device (200) comprises a planetary reducer.

3. The clutch type electric drive device for the bicycle of claim 1 or 2, wherein the pedal shaft (700) is configured with a first pedal assembly (1400) on a first end piercing through the first axle hole (601), and links up with the first pedal assembly (1400) to synchronously rotate with each other; on the other hand, the pedal shaft (700) is configured with a second pedal assembly (1500) on a second end piercing through the second axle hole (602), and links up with the second pedal assembly (1500) to synchronously rotate with each other.

4. The clutch type electric drive device for the bicycle of claim 3, wherein the motor (100) makes the ratchet (900) idle and does not drive the first pedal assembly (1400) and the second pedal assembly (1500).

5. The clutch type electric drive device for the bicycle of claim 3 or 4, wherein pedaling the first pedal assembly (1400) and the second pedal assembly (1500) makes the pedal shaft (700) and the input gear shaft (400) rotate, such that the input gear shaft (400) makes the outer ring of the unidirectional clutch bearing (300) pivotally rotate with respect to the inner ring of the unidirectional clutch bearing (300) but does not make the motor (100) rotate.

6. A clutch type electric drive device for a bicycle, comprising:
a support shaft tube (1100), being a hollow tube;
a motor (100), correspondingly fixed in the support shaft tube (1100), and having a driving shaft (101);
a decelerating device (200), configured on the driving shaft (101) of the motor (100), and outputting power through an output shaft (201);
a unidirectional clutch bearing (300), having an inner ring and an outer ring, the inner ring of the unidirectional clutch bearing (300) wedging the outer ring of the unidirectional clutch bearing (300) in one rotating direction, the inner ring of the unidirectional clutch bearing (300) pivotally rotating with respect to the outer ring of the unidirectional clutch bearing (300) in the other rotating direction, and the inner ring of the unidirectional clutch bearing (300) being configured on the output shaft (201);
an input gear shaft (400), having a fixing hole on a top of the input gear shaft (400), the outer ring of the unidirectional clutch bearing (300) being fixed in the fixing hole, and the input gear shaft (400) having a first steering gear (401) thereon;
an axle bracket (600), correspondingly configured at a bottom of the support shaft tube (1100), connected with the support shaft tube (1100), and configured with a first axle hole (601) and a second axle hole (602) on two transverse ends of the axle bracket(600);
a pedal shaft (700), rotatably configured in the axle bracket (600) and threading through the first axle hole (601) and the second axle hole (602), the pedal shaft (700) configured with a first pedal assembly (1400) on a first end piercing through the first axle hole (601) and linking up with the first pedal assembly (1400) to synchronously rotate with each other, and the pedal shaft (700) configured with a second pedal assembly (1500) on a second end piercing through the second axle hole (602) and linking up with the second pedal assembly (1500) to synchronously rotate with each other;
a fixing assembly (1200), comprising:
a fixing cover (1201), configured on one end of the pedal shaft (700), rotating with the pedal shaft (700) synchronously, the fixing cover (1201) having a fixing cover perforation (1202), a fixing trough (1205) and a plurality of first hooks, the pedal shaft (700) piercing through the fixing cover perforation (1202), and the plurality of first hooks being configured at a peripheral side of an inner surface of the fixing cover (1201);
an elastic component (1206); and
a fixing base (1203), having a fixing base perforation (1204) and a plurality of second hooks, the plurality of second hooks being configured at a peripheral side of a surface of the fixing base (1203) in correspondence with the first hooks, the elastic component (1206) being configured between the first hooks and the second hooks for supporting mutual rotations and engagements by the first hooks and the second hooks and for connecting the fixing cover (1201) with the fixing base (1203);
an axle casing (800), being an elongated tubular member, rotatably configured on the pedal shaft (700) and in the second axle hole (602), an inner end of the axle casing (800) piercing into the axle bracket (600), a second steering gear (801) being configured on the inner end, the second steering gear (801) directly engaging the first steering gear (401), and the axle casing (800) being configured around the fixing base (1203) with respect to the fixing base perforation (1204);
a first magnetic ring (1011), configured on an inner surface of the fixing base (1203), and the first magnetic ring (1011) synchronously rotating with the fixing base (1203);
a Hall magnetic induction device (1010), fixed in the axle bracket (600), and adjacent to the first magnetic ring (1011);
a second magnetic ring (1012), configured on the inner surface of the fixing base (1203), piercing through the fixing base (1203), locked on the inner surface of the fixing cover (1201), and coaxial with respect to the first magnetic ring (1011); and
a ratchet (900), configured on the axle casing (800) and also on the inner surface of the fixing cover (1201);
wherein, when a strength which is larger than a predetermined strength is exerted on the fixing cover (1201), the fixing cover (1201) pushes the elastic component (1206) to subsequently drive the second magnetic ring (1012) locked on the fixing cover (1201) to conduct a differential motion with respect to the first magnetic ring (1011), such that the Hall magnetic induction device (1010) senses a varying magnetic field resulting from the differential motion of the first magnetic ring (1011) and the second magnetic ring (1012), and then transmits an electric signal to control rotations of the motor (100).

7. The clutch type electric drive device for the bicycle of claim 6, wherein the first magnetic ring (1011) and the second magnetic ring (1012) comprise a plurality of magnetic poles which are alternately arranged.

8. The clutch type electric drive device for the bicycle of claim 6 or 7, wherein the elastic component (1206) comprises springs.

9. The clutch type electric drive device for the bicycle according to any one of claims 6 to 8, wherein the motor (100) makes the ratchet (900) idle and does not drive the first pedal assembly (1400) and the second pedal assembly (1500).

10. The clutch type electric drive device for the bicycle according to any one of claims 6 to 9, wherein pedaling the first pedal assembly (1400) and the second pedal assembly (1500) makes the pedal shaft (700) and the input gear shaft (400) rotate, such that the input gear shaft (400) makes the outer ring of the unidirectional clutch bearing (300) pivotally rotate with respect to the inner ring of the unidirectional clutch bearing (300) but does not make the motor (100) rotate.
